# EUROPEAN PATENT SPECIFICATION

(11) **EP 4 367 844 B1**
(45) Date of publication and mention of the grant of the patent: **22.04.2026**
(21) Application number: 21949468.9
(22) Date of filing: 09.07.2021
(51) Int. Cl.: G06Q 50/60, H04M 15/00, H04L 12/14, H04W 4/24, G06Q 30/04

(54) **METHOD AND APPARATUS FOR CONTROLLING CHARGING-RELATED SIGNALING IN A NETWORK**
VERFAHREN UND VORRICHTUNG ZUR STEUERUNG VON GEBÜHRENBEZOGENER SIGNALISIERUNG IN EINEM NETZWERK
PROCÉDÉ ET APPAREIL DE COMMANDE DE SIGNALISATION RELATIVE À LA CHARGE DANS UN RÉSEAU

(43) Date of publication of application: 15.05.2024
(73) Proprietor: Telefonaktiebolaget LM Ericsson (publ), 164 83 Stockholm (SE)
(72) Inventor: TÖRNKVIST, Robert, 371 54 Karlskrona (SE); BHAGAVATHULA, Lakshmi Narasimham, 371 57 Karlskrona (SE); HOEL, Karin, 371 40 Karlskrona (SE); NILSSON, Michael, 371 60 Lyckeby (SE); ÅHLBERG, Annika, 118 29 Stockholm (SE); PUUSTINEN, Stig, 179 75 Skå (SE); BOSSON WERÉLIUS, Grace, 371 23 Karlskrona (SE)
(74) Representative: Ericsson
(86) International application number: PCT/SE2021/050705
(87) International publication number: WO 2023/282809

(56) References cited:
- WO-A1-2017/172331
- WO-A1-2019/068360
- US-A1- 2011 040 845
- US-A1- 2013 275 583
- US-A1- 2016 165 068
- US-A1- 2020 177 516
- US-A1- 2020 252 763
- ERICSSON ET AL: "Support for rate control of CIoT Control Plane data", vol. SA WG2, no. Sophia Antipolis, France; 20160411 - 20160415, 14 April 2016 (2016-04-14), XP051092124, Retrieved from the Internet <URL:http://www.3gpp.org/ftp/tsg_sa/WG2_Arch/TSGS2_114_Sophia_Antipolis/Docs/> [retrieved on 20160414]
- ANONYMOUS: "3rd Generation Partnership Project; Technical Specification Group Services and System Aspects; Telecommunication Management; Charging management; Study on overload control for Diameter charging applications; (Release 15)", 3GPP STANDARD; TECHNICAL REPORT; 3GPP TR 32.869, vol. SA WG5, no. V15.0.0, 4 January 2018 (2018-01-04), pages 1 - 18, XP051392325

## Description

### TECHNICAL FIELD

Subject matter disclosed herein relates to charging in a communication network and particularly relates to controlling charging-related signaling.

### BACKGROUND

A network function (NF) in a communication network may request charging from a charging function (CHF), according to the service-based architecture specified in the Technical Specification (TS) 32.290 provided by the Third Generation Partnership Project (3GPP). Decisions by the NF regarding when to request a start of charging depend on internal settings at the NF or depend on polices received from a Policy Control Function (PCF). If the charging is session-based, a need exists for the CHF to set triggers controlling which service events for which the NF shall report usage or request a service quota from the CHF, with such triggers referred to as "mid-session triggers".

One or more triggers may be enabled by default at the NF associated with the service consumption, although the CHF may override such triggers. "Triggers" in these contexts represent conditions or events that cause the NF to send charging messages towards the CHF. There are no generic triggers, with all triggers being service dependent.

However, there are certain triggers defined in 3GPP TS 32.255 that are to a large extent applicable for all types of services, at least in session-based charging scenarios. Such triggers include: (1) a start-of-service/session trigger associated with requesting to use a new service or starting a session; (2) a time limit trigger prompting reporting after a specific time has passed since previous report; (3) a volume limit trigger prompting reporting after a specific volume has been used since previous report; (4) an event limit trigger prompting reporting after a specific number of events has been used since previous report; (5) a charging-condition changes trigger prompting reporting after a number of other triggers has been recorded since previous report; and (6) an end-of-service/session associated with ending the service or session.

Triggering on the above bases or conditions provides good flexibility, depending on the needs of the CHF, and limits the loss of data in instances of failure at the consumer NF. However, there are limited mechanisms available at the CHF with respect to controlling the processing and communication burdens imposed on it as a consequence of NFs in the network sending charging messages towards it. As an example, US 2020/0252763 A1 describes mechanisms by which an OCS configures the overload controls imposed at CTFs or other requesting entities in a communication network, meaning that the OCS can prioritize which requests are sent to it during overload conditions, at least in terms of the underlying services or circumstances associated with the request.

### SUMMARY

A Charging Function (CHF) of a communication network signals a payload size limit to a Charging Trigger Function (CTF) in the network, and the CTF applies the payload size limit to restrict the maximum payload of one or more charging messages sent by the CTF towards the CHF. Payload limits determined by the CHF depend, for example, on any one or more of the type(s) of communication services involved, the involved subscribers, or load at the CHF. "Load" refers to any one or more of processing load, storage load, or communication load, and the CHF in an example implementation may choose smaller payload limits to reduce its processing or storage loads, or choose larger payload limits, e.g., up to some maximum size, to reduce its communication load.

The invention is set out in the appended set of claims.

### BRIEF DESCRIPTION OF THE DRAWINGS

Figure 1 is a block diagram of a communication network according to an example embodiment.
Figure 2 is a logic flow diagram of a method of operation by a Charging Function (CHF) of a communication network, according to an example embodiment.
Figure 3 is a logic flow diagram of a method of operation by a Charging Trigger Function (CTF) of a communication network, according to an example embodiment.
Figures 4 and 5 are block diagrams of a CHF according to example embodiments.
Figures 6 and 7 are block diagrams of a CTF according to example embodiments.
Figure 8 is a block diagram of a communication network according to another example embodiment.
Figure 9 is a block diagram of a Network Function (NF) and a CHF, according to an example embodiment.
Figures 10 and 11 are signal flow diagrams of signaling between a CTF and a CHF, according to example embodiments.

### DETAILED DESCRIPTION

The maximum payload of charging messages going from a Network Function (NF) in a communication network to a supporting Charging Function (CHF) is sixteen million octets, i.e., 64 MB, with that limit being consistent with Hyper Text Transfer Protocol (HTTP) payload limits. Avoiding exceeding the maximum payload for charging messages sent towards the CHF from the Charging Trigger Functions (CTFs) implemented in given NFs prevents the receiving CHF from responding with "413 Request Entity Too Large". See Clause 4.9.6 of 3GPP TS 29.501 for related details. Example NFs with CTFs include any one or more of Session Management Functions (SMFs), Network Exposure Functions (NEFs), Short Message Service Functions (SMSFs), and Charging Enablement Functions (CEFs).

However, beyond the built-in limit of 64 MB for message payloads, a CHF operating according to existing specifications has no mechanism for imposing lower, tailored limits on the maximum payload size. Recognized herein is that providing such control to the CHF offers an efficient mechanism for the CHF to limit the amount of information incoming to it from one or more CTFs in any given interval of time. Another advantage offered by the disclosed techniques is that implementation does not require undue complexity and complements rather than disrupts established approaches to CTF/CHF signaling.

Configuring a CHF to signal dynamically-determined limits on the payload of one or more messages sent to it by a CTF allows the CHF to strike a balance between the number of messages sent or the frequency message transmission versus the processing and storage demands associated with processing the payloads of incoming messages. That is, commanding smaller message payloads may tend to increase the number of individual messages sent from the CTF, which increases the "communications" load at the CHF, whereas allowing larger message payloads, e.g., up to some predefined upper limit, tends to decrease the number of messages generated and sent by the CTF, at the expense of obligating the CHF to process larger message payloads in the requisite processing windows and, potentially, obligating the CHF to store larger amounts of processed data.

One solution disclosed herein defines a new "trigger" that prompts a CTF to send a charging-related message towards a CHF, when the amount of information to be included in the message-i.e., the message payload-reaches a payload size limit indicated to the CTF by the CHF via signaling. Here, the size limit may refer to uncompressed payloads, or the size limit may refer to compressed payloads, e.g., a limit to be observed by the CTF with respect to payloads compressed using "gzip" or the like. In one or more embodiments, the CHF sends a message to the CTF that indicates at least one of a size limit for payloads transmitted without compression, a size limit before compression for payloads transmitted with compression, and a size limit after compression for payloads transmitted with compression. Correspondingly, the CTF observes the indicated size limit(s) for one or more charging messages sent by it towards the CHF.

Such arrangements make it possible for the CHF to control the size and the frequency of charging messages sent from a CTF. The CHF may signal payload size limits for a particular charging event or for some number of related charging events. In one or more embodiments, the CHF explicitly or implicitly indicates a scope of applicability for a payload size limit, and that indication allows the CHF to know whether the size limit is to be imposed with respect to messages relating to a single charging event, or all related charging events, or to all charging events involving a given subscriber or subscribers, or to all charging events relating to a given service or type of service. The dynamic size limit may be "turned on" and "turned off" by the CHF, either globally at the CTF, or with respect to particular charging events or types of charging events.

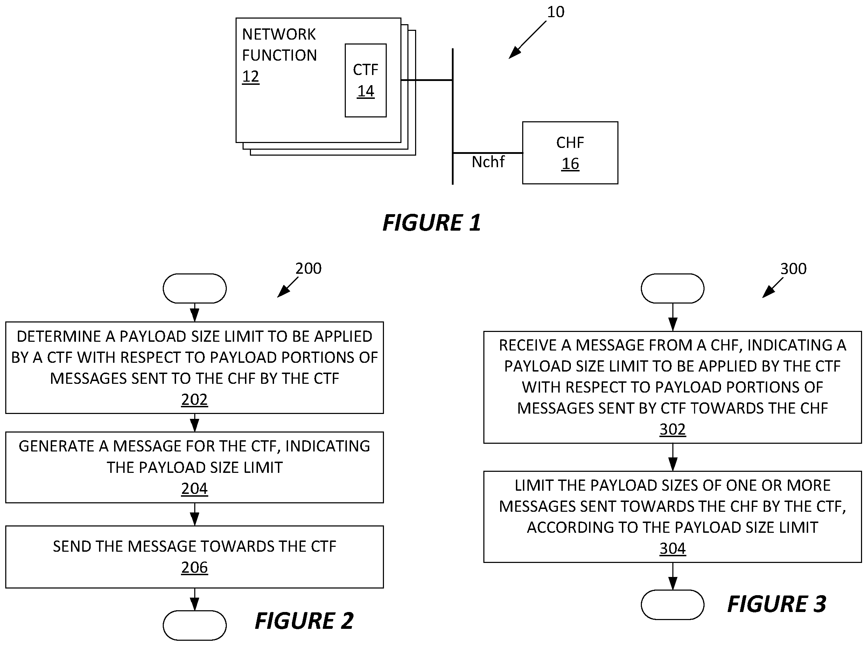

Figure 1 illustrates a communication network 10 that includes one or more Network Functions (NFs) 12, with included Charging Trigger Functions (CTFs) 14 that are communicatively coupled to a Charging Function (CHF) 16. In an example embodiment, the communication network 10 is a communication network operating according to specifications promulgated by the Third Generation Partnership Project (3GPP), such as a Fifth Generation (5G) network. Correspondingly, an example NF 12 is a Session Management Function (SFM), and an example CHF 16 provides converged charging functionality covering both event-based charging and session-based charging in online and offline charging scenarios. See 3GPP TS 23.501 V16.9.0 for example details regarding overall Fifth Generation (5G) network architecture, and 3GPP TS 32.240 V16.3.0 for details regarding example charging architecture and principles.

CTFs 14 report chargeable activities of subscribers to the CHF 16. "Subscriber" has broad meaning herein, denoting some type of User Equipment (UE) that is authorized to use the network 10 and is linked or otherwise associated with some kind of chargeable account or credit store that is used in authorizing or charging communication-service sessions or events involving the UE.

Chargeable activities may involve event-based communication services or session-based communication services and may involve services charged on an online basis-as they are consumed-or charged on an offline basis-post consumption. These chargeable activities comprise or cause "charging events" to occur at the CTFs 14, where a "charging event" is any event at a CTF 14 that requires or triggers the CTF 14 to send a charging-related message towards the CHF 16.

For example, a subscriber initiating use of a communication service subject to session-based online charging is a charging event that triggers the CTF 14 to send a Charging Request towards the CHF 16, requesting an initial authorization for starting the session. Continuation of the session requires the CHF 16 to send one or more further, intermediate Charging Requests, requesting continued authorization, with the termination of the session triggering one or more further Charging Requests to be sent by the CTF 14 towards the CHF 16.

A Charging Request may identify the subscriber, the communication service involved, and the type of charging that triggered the request. A Charging Request may also include a significant amount of other information, such as UE location, service-usage details and related logged information. However, as shown in the example embodiment of Figure 2, a CHF 16 may be configured to carry out a method 200 in which the CHF 16 is operative to determine a payload size limit to be applied by a CTF 14.

The method 200 includes the CHF 16 determining (Block 202) a payload size limit to be applied by a CTF 14 with respect to payload portions of messages sent to the CHF 16 by the CTF 14, generating (Block 204) a message for the CTF 14, indicating the payload size limit, and sending (Block 206) the message towards the CTF 14.

Determining (Block 202) the payload size limit is performed, for example, in conjunction with the CHF 16 responding to a charging request message from the CTF 14, such that generating (Block 204) the message for the CTF 14 comprises generating a charging response message in reply to the charging request message. In one or more embodiments, or in one or more example instances of operation by the CHF 16, the charging request message is an initial charging request message sent from the CTF 14 for an initial charging event at the CTF 14. An "initial" charging event refers to charging that may involve multiple related events for the same subscriber, e.g., such as the initiation of a charging session for charging a session-based service.

In one or more other embodiments, or in one or more example instances of operation by the CHF 16, the charging request message is a subsequent charging request message sent from the CTF 14. Here, determining (Block 202) the payload size limit comprises re-determining the payload size limit with respect to a prior payload size limit indicated to the CTF 14 by the CHF 16, e.g., for any one or more of the same subscriber, or same session, or same service, or same service type. In other words, the CHF 16 may indicate a payload size limit to the CTF 14 and may expressly or implicitly indicate the scope of applicability of that payload size limit in terms of logical scope and/or temporal scope.

Temporal scope refers to whether the indicated payload size limit is good until canceled or expires after a certain time, unless refreshed. Logical scope refers to the chargeable events to which the indicated payload size limit is applied. For example, the chargeable events may be only those events involving a specific subscriber or even a specific charging session or specifically related charging events. On the other hand, an indicated payload size limit may have global scope-i.e., it is applied by the CTF 14 across chargeable events regardless of the particular subscriber(s) involved, at least for chargeable events relating to specific communication services or types of services-e.g., chargeable events related to multimedia streaming. In an example case, the scope is defined at the subscriber or User Equipment (UE) level, such that an indicated payload size limit applies to any number of services being used in parallel by the subscriber or UE, and the payload size limit may serve as a limit on aggregated payloads that involve charging data for more than one service.

A subsequent charging request message from the CTF 14 may include a trigger indication, indicating that the subsequent charging request message was triggered at the CTF 14 because of the prior payload size limit. Correspondingly, in one or more embodiments, the method 200 includes the CHF 16 re-determining the payload size limit responsive to the trigger indication.

One or more embodiments of the method 200 include the CHF 16 calculating the payload size limit in dependence on any one or more of: a service indicated by the CTF 14 in a charging request message sent by the CTF 14 to the CHF 16, profile information associated with a subscriber indicated in the charging request message, and load conditions at the CHF 16. Here, "load conditions" refers to "resource loading" at the CHF 16. Example resources are any one or more of communication-interface resources, computational resources, and storage resources.

Communication-interface resources refers to the overall message inflow/outflow bandwidth or messages-per-second capacity of the CHF 16. In an example embodiment, the CHF 16 chooses a relatively larger size limit for message payloads responsive to the loading on its communication interface reaching some defined threshold.

Computational resources refers to the message-processing resources of the CHF 16, such as what percentage of an overall message processing or computations-per-second processing capacity remain available at the CHF 16. In an example embodiment, the CHF 16 chooses a relatively smaller size limit for message payloads responsive to the loading on its computational resources reaching some defined threshold.

Storage resources refers to the memory or other storage space available to the CHF 16 for holding data from incoming charging-related messages and any associated processing results. In an example embodiment, the CHF 16 chooses a relatively smaller size limit for message payloads responsive to the loading on its storage resources reaching some defined threshold.

The CHF 16 may consider only one type of resource loading when deciding payload size limits or it may perform joint or weighted consideration of two or more types of resource loading when deciding payload size limits. Additionally, it may use different resource-loading thresholds for different subscribers or different services or service types, e.g., to reflect differing priorities regarding subscribers or services.

Broadly, determining (Block 202) the payload size limit comprises calculating the payload size limit as a function of prevailing load conditions at the CHF 16. The prevailing load conditions include a prevailing communication load at the CHF 16, in one or more embodiments, wherein determining (Block 202) the payload size limit comprises the CHF 16 setting the payload size limit to a relatively higher value, responsive to the prevailing communication load exceeding a defined communication load threshold. Here, "relatively larger" simply means that the CHF 16 chooses or calculates a payload size limit that is larger than it would have chosen or calculated if the communication load threshold were not exceeded.

The prevailing load conditions include a prevailing processing load at the CHF 16, in one or more embodiments, and determining (Block 202) the payload size limit comprises the CHF 16 setting the payload size limit to a relatively lower value, responsive to the prevailing processing load exceeding a defined processing load threshold. Here, "relatively lower" simply means that the CHF 16 chooses or calculates a payload size limit that is smaller than it would have chosen or calculated if the processing load threshold were not exceed.

As noted, determining (Block 202) the payload size limit comprises, in one or more embodiments, the CHF 16 determining a size limit for uncompressed payloads and determining a size limit for compressed payloads. Further, the message sent towards the CTF 14 by the CHF 16 to indicate the payload size limit also may indicate an applicability scope of the payload size limit. "Applicability scope" refers to the temporal or logical scope of the size limit, as explained above.

Figure 3 illustrates a method 300 performed by a CTF 14 of a communication network 10, in an example embodiment. The method 300 includes receiving (Block 302) a message from a CHF 16 of the communication network 10. The message indicates a payload size limit to be applied by the CTF 14 with respect to payload portions of messages sent to the CHF 16 by the CTF 14, and the method 300 further includes the CTF 14 limiting (Block 304) payload sizes of one or more messages sent towards the CHF 16 by the CTF 14, according to the payload size limit.

Receiving (Block 302) the message from the CHF 16 comprises, for example, the CTF 14 receiving a charging response message from the CHF 16, sent in response to a charging request message sent from the CTF 14 towards the CHF 16 for a charging event at the CTF 14. The charging request message comprises an initial charging request message, for example, sent for an initial charging event involving a subscriber.

The method 300 further includes, for example, the CTF 14 sending a subsequent charging request message towards the CHF 16, in response to payload information for a related or different charging event at the CTF 14 reaching the payload size limit. The subsequent charging request message indicates the payload size limit as a triggering basis. In other words, the payload size limit indicated by the CHF 16 defines a new trigger condition at the CTF 14, for triggering the CTF 14 to send a charging message towards the CHF 16.

The triggering condition may apply only to charging events that are related to the charging event for which the CHF 16 returned the payload size limit, or it may have broader applicability. Payload size limits may have limited applicability by default-e.g., a payload size limit indicated by the CHF 16 may by default apply only to related charging events-e.g., other charging events in the same charging session, or for the same subscriber, or for the same service or type of service, or any combination of such limitations. Alternatively, the default applicability may be broader, e.g., all charging events originating at the CTF 14 until the payload size limit expires or a new payload size limit is indicated. Of course, such broad applicability may still be tailored, e.g., by limiting application of the payload size limit only to the service or service type involved in the charging message that conveyed the payload size limit.

With such arrangements, the CTF 14 may operate with one broadly applied message payload size limit, or it may operate with different payload size limits applied for different subscribers and/or different services or service types. As such, at any given time, the CTF 14 may use different message payload size limits for different subscribers or services or may apply a message payload size limit to some charging messages sent towards the CHF 16 but not to others. The message from the CHF 16 that carries the payload size limit may include an indication indicating an applicability scope of the payload size limit, and that indication controls the temporal or logical scope of application of the message payload size limit at the CTF 14.

The size limit indicated by the CHF 16 may comprise size limits referring to any one or more of the uncompressed payload size, payload size before compression, and payload size after compression. Limiting (Block 304) the payload sizes of the one or more messages sent towards the CHF 16 by the CTF 14 in such circumstances comprises any one or more of such limits with respect to the payload(s) of one or more messages.

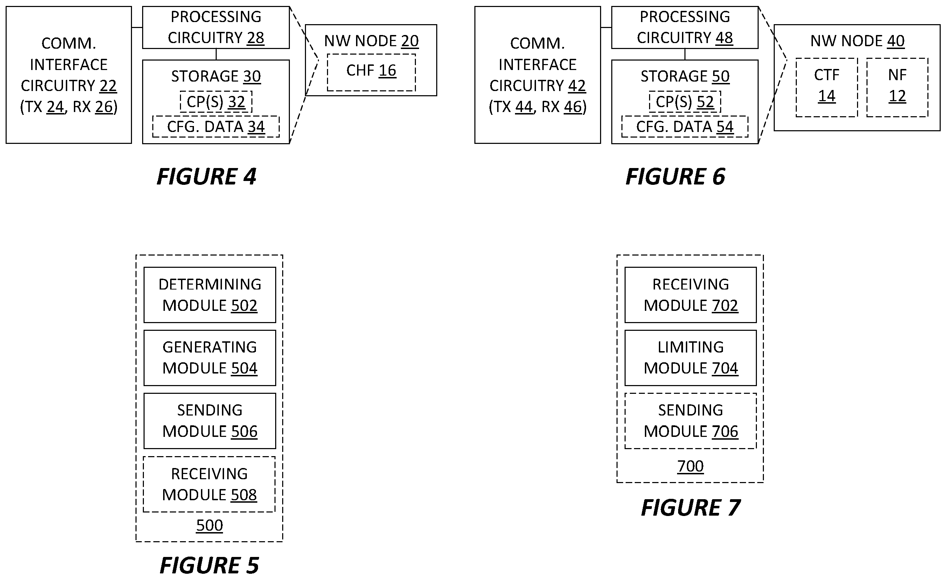

Figure 4 illustrates a network node 20 according to an example embodiment, where the network node 20 is configured for operation as a CHF 16 of a communication network 10. The network node 20 includes communication interface circuitry 22 configured to exchange charging-related signaling with a network node 40 operating as a CTF 14 in the communication network 10. The communication interface circuitry 22 comprises, for example, transmitter circuitry (TX) 24 configured to transmit signals over a physical medium and receiver circuitry (RX) 26 configured to receive signals over the physical medium.

Further, the network node 20 includes processing circuitry 28 configured to determine a payload size limit to be applied by the CTF 14 with respect to payload portions of messages sent to the CHF 16 by the CTF 14, generate a message for the CTF 14, indicating the payload size limit, and send the message towards the CTF 14.

The processing circuitry 28 comprises fixed circuitry or programmatically-configured circuitry, or some mix thereof. In one or more embodiments, the processing circuitry 28 comprises one or more microprocessors that are specially adapted to operate as described herein for the processing circuitry 28, based on executing computer program instructions stored in storage 30, which comprises one or more types of computer-readable medium. The computer program instructions may be held as one or more computer programs ("CP(s)") 32 held in the storage 30, which also may store one or more types of configuration data 34.

Determining the payload size limit is performed in conjunction with the CHF 16 responding to a charging request message from the CTF 14, for example. In such embodiments or instances of operation, the processing circuitry 28 generating the message for the CTF 14 comprises generating a charging response message in reply to the charging request message. The charging request message is an initial charging request message, for example, sent from the CTF 14, for an initial charging event at the CTF 14.

In other embodiments, or in other examples of operational circumstances, the charging request message is a subsequent charging request message sent from the CTF 14. Here, the processing circuitry 28 determines the payload size limit by re-determining the payload size limit with respect to a prior payload size limit indicated to the CTF 14 by the CHF 16. In at least one embodiment of the CHF 16 relevant to this example, the CHF 16 determines a payload size limit according to prevailing conditions or then-applicable considerations, and then later determines an updated size limit that modifies, overrides, or otherwise replaces that earlier-determined payload size limit, at least with respect to the scope of applicability of that earlier-determined payload size limit.

After the CHF 16 indicates a payload size limit to the CTF 14, that size limit defines a trigger condition at the CTF 14, i.e., for charging-related data governed by the payload size limit, the CTF 14 should not accumulate charging-related data in excess of the payload size limit. Consequently, accumulating that amount of data triggers the CTF 14 to send a subsequent charging request message towards the CHF 16, with this subsequent charging message including a trigger indication, indicating that the subsequent charging request message was triggered at the CTF 14 because of the prior payload size limit. Correspondingly, the CHF 16 may re-determine the payload size limit in response to the trigger indication. That is, in response to receiving a charging-related message as a consequence of governed charging-related data at the CTF 14 reaching the size limit, the CHF 16 may recalculate the size limit on then-prevailing conditions or circumstances, meaning that the CHF 16 may maintain the prior size limit or modify it (where "modifying" includes canceling or removing it).

The processing circuitry 28 in at least one embodiment is configured to calculate a payload size limit in dependence on any one or more of: a service indicated by the CTF 14 in a charging request message sent by the CTF 14 to the CHF 16, profile information associated with a subscriber indicated in the charging request message, and load conditions at the CHF 16.

To determine a payload size limit, the processing circuitry 28 in one or more embodiments is configured to calculate the payload size limit as a function of prevailing load conditions at the CHF 16. The prevailing load conditions include, for example, a prevailing communication load at the CHF 16, where the processing circuitry 28 is configured to determine the payload size limit by setting the payload size limit to a relatively higher value, responsive to the prevailing communication load exceeding a defined communication load threshold. In the same embodiment or in another embodiment, the prevailing load conditions considered by the processing circuitry 28 include a prevailing processing load at the CHF 16, where the processing circuitry 28 is configured to determine the payload size limit by setting the payload size limit to a relatively lower value, responsive to the prevailing processing load exceeding a defined processing load threshold.

In embodiments where the processing circuitry 28 is configured to consider multiple factors, such as communication load and processing load, the processing circuitry 28 may be configured to perform a joint or weighted evaluation of the multiple factors based on priority or respective levels of loading, to determine a payload size limit. Broadly, the processing circuitry 28 may be configured to consider various types of loading or other prevailing circumstances when deciding the payload size limit and when deciding the applicability scope of the payload size limit. In at least one embodiment, policy information provided to the CHF 16 by a policy node in the communication network 10 defines various payload size limits to be used under certain circumstances or with respect to certain subscriber or certain services.

As noted, there may be a payload size limit determined for uncompressed payloads and a payload size limit determined for compressed payloads. Hence, when determining a payload size limit, the processing circuitry 28 in one or more embodiments is configured to express the size limit as two values: a size limit for uncompressed payloads and a size limit for compressed payloads. Also as noted, a message sent towards the CTF 14 by the CHF 16 that includes a payload size limit may also indicate an applicability scope of the payload size limit.

Figure 4 illustrates a network node 20 according to an example embodiment, where the network node 20 is configured for operation as a CHF 16 of a communication network 10. The network node 20 includes communication interface circuitry 22 configured to exchange charging-related signaling with a network node 40 operating as a CTF 14 in the communication network. Further, the network node 20 includes processing circuitry 28 configured to determine a payload size limit to be applied by the CTF 14 with respect to payload portions of messages sent to the CHF 16 by the CTF 14, generate a message for the CTF 14, indicating the payload size limit, and send the message towards the CTF 14.

Figure 5 illustrates another embodiment of a CHF 16, such as may be implemented via a network node 20. Here, the CHF functionality is comprised in a set 500 of processing units or modules, which can be understood as logical functions realized via underlying processing circuitry, such as one or more microprocessors that are programmatically configured via their execution of computer program instructions.

The example set 500 of processing modules includes a determining module 502 configured to determine a payload size limit to be applied by the CTF 14 with respect to payload portions of messages sent to the CHF 16 by a CTF 14, and a generating module 504 configured to generate a message for the CTF 14, indicating the payload size limit. Further, the example set 500 of processing modules includes a sending module 506 configured to send the message towards the CTF 14, and the CHF 16 may further include a receiving module 508 that is configured to receive messages from the CTF 14.

Figure 6 illustrates a network node 40 according to an example embodiment, where the network node 40 is configured to operate as a CTF 14 in a communication network 10. The network node 40 includes communication interface circuitry 42 configured to exchange charging-related signaling with a network node 20 operating as a CHF 16 in the communication network 10. The communication interface circuitry 42 comprises, for example, transmitter circuitry (TX) 44 configured to transmit signals over a physical medium and receiver circuitry (RX) 46 configured to receive signals over the physical medium.

The network node 40 further includes processing circuitry 48 configured to receive a message from the CHF 16, the message indicating a payload size limit to be applied by the CTF 14 with respect to payload portions of messages sent to the CHF 16 by the CTF 14, and limit payload sizes of one or more messages sent towards the CHF 16 by the CTF 14, according to the payload size limit.

The processing circuitry 48 comprises fixed circuitry or programmatically-configured circuitry, or some mix thereof. In one or more embodiments, the processing circuitry 48 comprises one or more microprocessors that are specially adapted to operate as described herein for the processing circuitry 48, based on executing computer program instructions stored in storage 50, which comprises one or more types of computer-readable medium. The computer program instructions may be held as one or more computer programs ("CP(s)") 52 held in the storage 50, which also may store one or more types of configuration data 54.

In one or more embodiments, the message received from the CHF 16 is a charging response message sent from the CHF 16 in response to a charging request message sent from the CTF 14 towards the CHF 16, for a charging event at the CTF 14. The charging request message may be an initial charging request message sent for an initial charging event involving a subscriber. The processing circuitry 48 may be configured to send a subsequent charging request message towards the CHF 16 in response to payload information for a related or different charging event at the CTF 14 reaching the payload size limit, the subsequent charging request message indicating the payload size limit as a message triggering basis.

The message from the CHF 16 regarding payload size limits may indicate a size limit for uncompressed payloads and a size limit for compressed payloads. In such embodiments, the processing circuitry 48 is configured to limit the payload sizes of the one or more messages sent towards the CHF 16 by the CTF 14 by limiting uncompressed payload sizes to the size limit indicated for uncompressed payloads and limiting compressed payload sizes to the size limit indicated for compressed payloads.

Further, in one or more embodiments, a message from a CHF 16 that indicates a payload size limit may also indicate an applicability scope of the payload size limit. Correspondingly, the processing circuitry 48 of the network node 40 in such embodiments is configured to apply (and not apply) the payload size limit in accordance with the indicated applicability scope.

Figure 7 illustrates another embodiment of a CTF 14, implemented as a set 700 of processing units or modules. The set 700 includes a receiving module 702 that is configured to receive a message from a CHF 16, the message indicating a payload size limit to be applied by the CTF 14 with respect to payload portions of messages sent to the CHF 16 by the CTF 14. The set 700 further includes a limiting module 704 that is configured to limit payload sizes of one or more messages sent towards the CHF 16 by the CTF 14, according to the payload size limit. Still further, the set 700 includes a sending module 706 that is configured to send messages towards the CHF 16, e.g., charging-related messages having payload sizes limited in accordance with any applicable payload size limits indicated by the CHF 16.

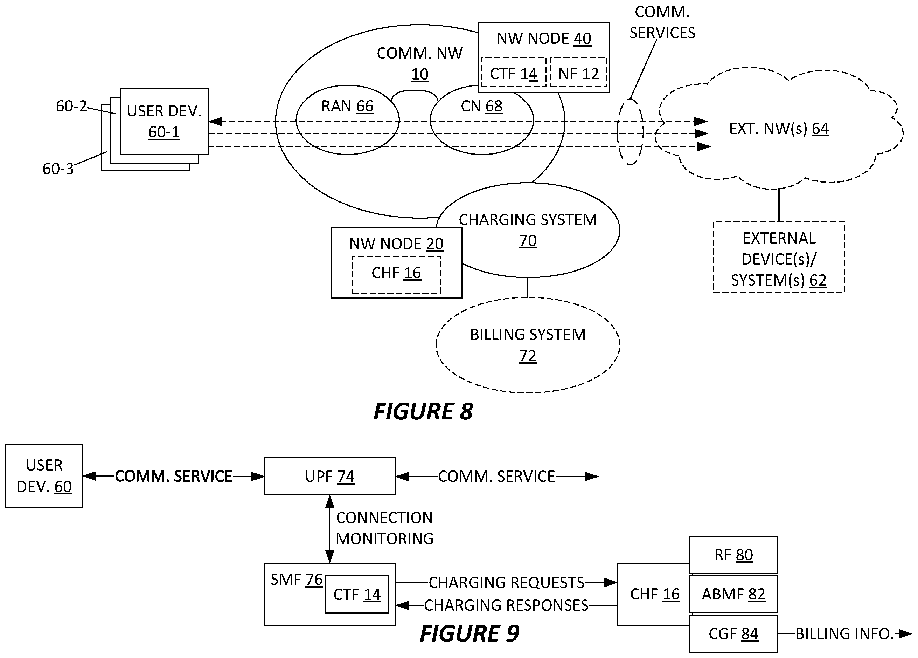

Figure 8 illustrates one embodiment of the communication network 10, implemented as a wireless communication network that communicatively couples one or more user devices 60 with other devices or systems 62 reachable via one or more external networks 64. For example, the communication network 10 communicatively couples user devices to one or more types of Internet-based communication services.

The diagram shows three user devices 60-1, 60-2, and 60-3 merely as an illustrative example, with the devices denoted in the diagram using the label "USER DEV". A greater or lesser number of user devices 60 may be active in the communication network 10 at any given time. The user devices 60 may also be referred to as user equipments or UEs.

The communication network 10 includes one or more Radio Access Networks (RANs) 66 that are based on one or more Radio Access Technologies (RATs), and further includes a Core Network (CN) 68 to provide access control, authorization, mobility management, and routing/coupling of user traffic to and from the external networks. In one or more example embodiments, the communication network is a 5G network, having a RAN 66 based on New Radio (NR) specifications and having a CN 68 based on 5G Core (5GC) specifications.

A charging system 70 includes a network node 20 that implements a CHF 16, where the charging system 70 comprises, for example, a converged charging system and couples to a billing system 72. In an example embodiment where the charging system 70 is a converged charging system for a 5G network, it includes additional functions beyond the CHF 16, such as an Account Balance and Management Function (ABMF), a Rating Function (RF), and a Charging Gateway Function (CGF).

A network node 40 in or associated with the CN 68 implements a NF 12 and an associated CTF 14 that sends charging-related messages towards the CHF 16.

Figure 9 shows a specific example of the NF 12, where a User Plane Function (UPF) 74 of the communication network 10 shown in Figure 8 provides user-plane connectivity between a user device 60 and a communication service. A Session Management Function (SMF) 76 provides connection monitoring for the user-plane connection and the CTF 14 in the SMF 76 generates charging-related messages based on communication-service usage reporting from the UPF 74.

Particularly, the CTF 14 generates charging request messages sent towards the CHF 16 and the CHF 16 returns corresponding charging response messages. As noted above, the CHF 16 may be associated with a RF 80 to rate the "cost" of service according to applicable tariffs, an ABMF 82 to manage user-account reservations and reconciliation for service authorization and account billing, and a CGF 84 for interfacing with the billing system 72. In the context of Figure 9, the CHF 16 determines a payload size limit that is applicable at least to the user device 60 or the service used by the user device 60, and the CTF 14 in the SMF 76 applies that payload size limit to one or more of the charging-related messages sent from the CTF 14 towards the CHF 16.

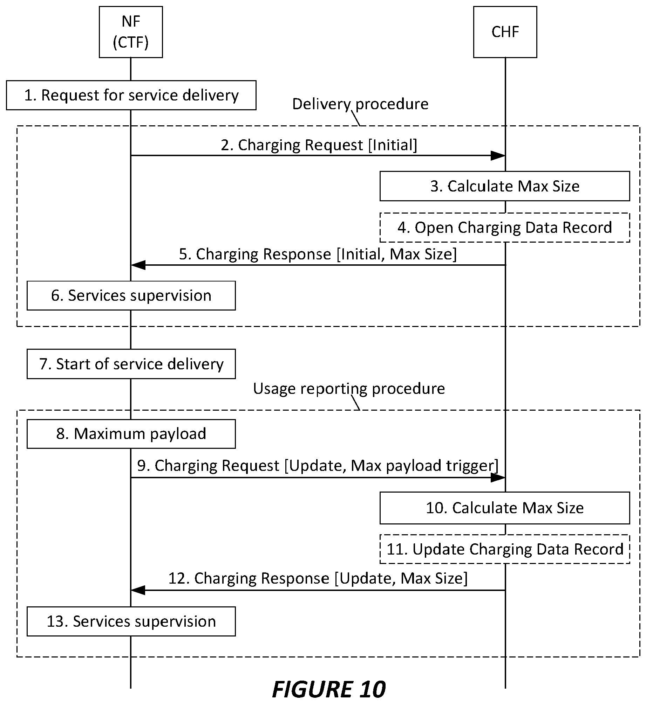

Figure 10 illustrates signaling going between the CTF of a NF and a CHF, according to an example embodiment:
1. Request for service delivery: A request for session establishment is received in the NF (CTF). The service is configured to be authorized by the CHF to start.
2. Charging Request [Initial]: The NF (CTF) sends the request to the CHF for the service to be reported.
3. Calculate max size: the CHF checks the requests and calculates the optimal maximum size of the payload based on the services in the request, subscriber data and load in CHF etc.
4. Open Charging Data Record (CDR): based on policies, the CHF opens a CDR related to the service.
5. Charging Response [Initial, Max size]: The CHF responds with the calculated max size of the payload, compressed, uncompressed or both.
6. Service supervision: the NF (CTF) starts to monitor the service usage.
7. Start of service delivery: the NF (CTF) starts to deliver the content/service.
8. Maximum payload: the NF (CTF) checks the current payload size and sees that the maximum has been reached.
9. Charging Request [Update]: the NF (CTF) sends the request to the CHF due to the trigger condition charge, for more units to be granted for the service to continue and reporting the used units.
10. Calculate max size: the CHF checks the requests and calculates the optimal maximum size of the payload based on the services in the request, subscriber data and load in CHF, etc.
11. Update CDR: based on policies, the CHF updates the CDR with charging data related to the service.
12. Charging Response [Update, Max size]: The CHF responds with the calculated max size of the payload, compressed, uncompressed or both.
13. Service supervision: the NF (CTF) continues to monitor the service usage.

The NF can be any functions in the 3GPP 5GC context. An example use case is the NF being a SMF, where the SMF contains a CTF that uses the charging services of a CHF, e.g., based on using the Nchf service interface defined for charging in 5G networks.

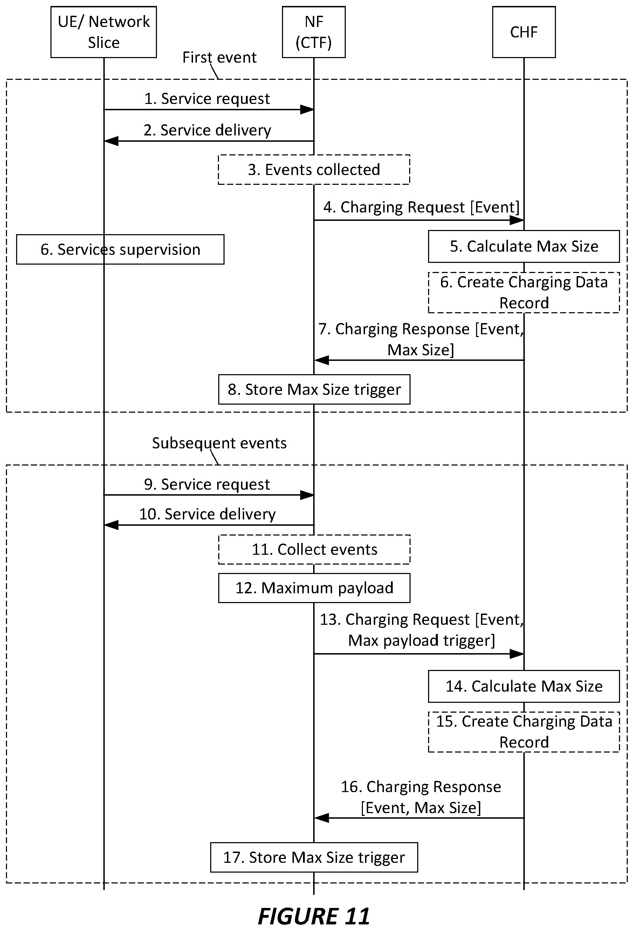

Figure 11 illustrates signaling going between the CTF of a NF and a CHF, according to another example embodiment:
1. Service request: A request for a service is done by a UE, network slice, group of UEs etc., request a service to be delivered by the NF (CTF).
2. Service delivery: The NF (CTF) delivers the service as per the request.
3. Events collected: The NF (CTF) may collect several events before triggering the CHF based on internal configuration.
4. Charging Request [Event]: The NF (CTF) sends the request to the CHF, reporting the usage of service.
5. Calculate max size: the CHF checks the requests and calculates the optimal maximum size of the payload based on the services in the request, subscriber data and load in CHF etc.
6. Creates CDR: based on policies, the CHF opens and closes a CDR related to the service.
7. Charging Response [Event, Max size]: The CHF responds with the calculated max size of the payload, compressed, uncompressed or both.
8. Store max size trigger: The NF (CTF) stores the max size to be used for further requests towards the CHF.
9. Service request: A new request for a service is done by a UE, network slice, group of UEs etc., request a service to be delivered by the NF (CTF).
10. Service delivery: The NF (CTF) delivers the service as per the request.
11. Collect events: The NF (CTF) may collect several events.
12. Maximum payload: the NF (CTF) checks the current payload size and sees that the maximum has been reached.
13. Charging Request [Event, Max payload trigger]: the NF (CTF) sends the request to the CHF due to the trigger for maximum payload has been reached, reporting the usage of service.
14. Calculate max size: the CHF checks the requests and calculates the optimal maximum size of the payload based on the services in the request, subscriber data and load in CHF etc.
15. Creates CDR: based on policies, the CHF opens and closes a CDR related to the service.
16. Charging Response [Event, Max size]: The CHF responds with the calculated max size of the payload, compressed, uncompressed or both.
17. Store max size trigger: The NF (CTF) stores the new value max size to be used for further requests towards the CHF.

3GPP TS 32.291 V16.8.0 includes Table 6.1.6.2.1.7-1, defining various types of charging-message triggers at a CTF. The table is shown below with proposed additions/modifications to the table shown in italicized bold text:

| Attribute name | Data type | | Cardinality | Description |
|---|---|---|---|---|
| triggerType | TriggerType | O_{C} | 0..1 | the events whose occurrence lead to charging event is issued towards the CHF |
| triggerCategory | TriggerCategory | M | 1 | This field indicates whether the charging data generated by the NF consumer for the trigger lead to a Charging Event towards the CHF immediately or not. |
| timeLimit | DurationSec | O_{C} | 0..1 | Time limit if trigger type is "Expiry of data time limit" |
| volumeLimit | Uint32 | O_{C} | 0..1 | Volume limit if trigger type is "Expiry of data volume limit". This attribute is not valid from Nchf_ConvergedCharging API version v2.0.0 |
| volumeLimit64 | Uint64 | O_{C} | 0..1 | Volume limit if trigger type is "Expiry of data volume limit". This attribute replaces the volumeLimit attribute from Nchf_ConvergedCharging API v2.0.0 |
| maxNumberOfc cc | Uint32 | O_{C} | 0..1 | Maximum number if trigger type is "Max nb of number of charging condition changes" |
| tariffTimeChange | DateTime | O_{C} | 0..1 | This field contains UTC time indicating the switch time when the tariff will be changed. |
| ***maxPayload*** | ***Uint64*** | | | ***This field contains maximum payload before any compression.*** |
| ***maxGzipPayload*** | ***Uint64*** | ***O_{C}*** | ***0..1*** | ***This field contains maximum payload for the gzip compression.*** |

Proposed modifications to Table 6.1.6.3.6-1 in the same TS, which enumerates trigger types, appear below in italicized bold text:

| Enumeration value | Description | Applicability |
|---|---|---|
| QUOTA _THRESHOLD | the quota threshold has been reached | |
| QHT | the quota holding time specified in a previous response has been hit (i.e. the quota has been unused for that period of time) | |
| FINAL | a service normal termination has occurred. | |
| QUOTA _EXHAUSTED | the quota has been exhausted | |
| VALIDITY _TIME | the credit authorization lifetime provided from CHF has expired | |
| OTHER_QUOTA_TYPE | usage reporting of the particular quota type indicated in the used unit container where it appears is that, for a multidimensional quota, one reached a trigger condition and the other quota is being reported. | |
| FORCED_REAUTHORIS ATION | a Server initiated re-authorization procedure, i.e. receipt of notify service operation | |
| UNIT_COUNT_INACTIV ITY_TIMER | the unit count inactivity timer has expired | |
| ABNORMAL_RELEASE | a service abnormal termination has occurred. | |
| QOS_CHANGE | In request message, this value is used to indicate that QoS change has happened. Any of elements of QoSData may result in QoS change. | |
| | In response message, this value is used to indicate that a change of authorized QoS shall cause the service consumer to ask for a re-authorization of the associated quota. | |
| VOLUME _LIMIT | Volume limit has been reached. | |
| TIME_LIMIT | Time limit has been reached | |
| EVENT_LIMIT | Event limit has been reached | |
| PLMN_CHANGE | PLMN has been changed. | |
| USER_LOCATION_CHANGE | In request message, this value is used to indicate that User location has been changed. | |
| | In response message, this value is used to indicate that a change in the end user location shall cause the service consumer to ask for a re-authorization of the associated quota | |
| RAT_CHANGE | In request message, this value is used to indicate that RAT type has been changed. | |
| | In response message, this value is used to indicate that a change in the radio access technology shall cause the service consumer to ask for a re-authorization of the associated quota | |
| SESSION_AMBR_CHANGE | In request message, this value is used to indicate that Session AMBR has been changed. | |
| | In response message, this value is used to indicate that a change in the session AMBR shall cause the service consumer to ask for a re-authorization of the associated quota. | |
| GFBR_GUARANTEED_S TATUS_CHANGE | In request message,thisvalue is used to indicate that GFBR targets for the indicated SDFs are changed ("NOT_GUARANTEED" or "GUARANTEED" again). | |
| | In response message, this value is used to indicate that a NF Consumer (CTF) needs to ensure requesting the notification from the access network and that a change in the GFBR targets shall cause the service consumer to ask for a re-authorization of the associated quota. | |
| UE_TIMEZONE_CHANGE | In request message, this value is used to indicate that UE timezone has been changed. | |
| | In response message, this value is used to indicate that a change in the time zone where the end user is located shall cause the service consumer to ask for a re-authorization of the associated quota. | |
| TARIFF_TIME_CHANGE | Tariff time change has happened. | |
| MAX_NUMBER_OF_CH ANGES_IN_CHARGING _CONDITIONS | Max number of change has been reached | |
| MANAGEMENT_INTER VENTION | Management intervention | |
| CHANGE_OF_UE_PRES ENCE_IN_PRESENCE_R EPORTING_AREA | In request message, this value is used to indicate that Change of UE presence in PRA has happened. | |
| | In response message, this value is used to indicate a request of reporting the event that the user enters/leaves the area(s) as indicated in the presenceReportingArea Attribute | |
| CHANGE_OF_3GPP_PS_ DATA_OFF_STATUS | In request message, this value is used to indicate that Change of 3GPP PS Data off status has happened. | |
| | In response message, this value is used to indicate that a change in the 3GPP PS Data off status shall cause the service consumer to ask for a re-authorization of the associated quota | |
| SERVING_NODE_CHANGE | A serving node (e.g., AMF) change in the NF Consumer | |
| REMOVAL_OF_UPF | A used UPF is removed | |
| ADDITION_OF_UPF | A new UPF is added. | |
| INSERTION_OF_ISMF | A new I-SMF is inserted | |
| REMOVAL_OF_ISMF | A used I-SMF is removed | |
| CHANGE_OF_ISMF | A used I-SMF is removed, and a new I-SMF is inserted | |
| START_OF_SERVICE_D ATA_FLOW | A Service Data Flow has started | |
| HAND_OVER_CANCEL | The handover is canceled. | |
| HAND_OVER_START | The handover is start. | |
| HANDOVER_COMPLETE | The handover is completed. | |
| ECGI_CHANGE | In request message, this value is used to indicate that ECGI has been changed. | 5GIEPC_CH |
| | In response message, this value is used to indicate that a change in the end user location shall cause the service consumer to ask for a re-authorization of the associated quota | |
| TAI_CHANGE | In request message, this value is used to indicate that TAI has been changed. | 5GIEPC_CH |
| | In response message, this value is used to indicate that a change in the end user location shall cause the service consumer to ask for a re-authorization of the associated quota | |
| ADDITION_OF_ACCESS | Addition of access to the MA PDU session | ATSSS |
| REMOVAL_OF_ACCESS | Removal of access to the MA PDU session | ATSSS |
| START_OF_SDF_ADDIT IONAL_ACCESS | Start of service data flow on additional access in a MA PDU session | ATSSS |
| ***MAX_PAYLOAD*** | ***The maximum size of the payload has been reached*** | |

The maxPayload should be read as being applicable both when the payload is sent compressed or uncompressed; it should be understood as the size before any compression is done or of the actual payload if there is not any compression. The new trigger category only creates a report if there is usage.

## Claims

1. A method (200) performed by a Charging Function, CHF, (16) of a communication network (10), the method (200) comprising:
determining (202) a payload size limit to be applied by a Charging Trigger Function, CTF, (14) with respect to the size of payload portions of charging messages sent to the CHF (16) by the CTF (14) within the same charging session, for triggering the CTF 14 to send a charging message towards the CHF (16) in response to the payload portion of the charging message reaching the payload size limit;
generating (204) a message for the CTF (14) indicating the payload size limit; and
sending (206) the message towards the CTF (14).

2. The method (200) of claim 1, wherein determining (202) the payload size limit is performed in conjunction with the CHF (16) responding to a charging request message from the CTF (14), such that generating (204) the message for the CTF (14) comprises generating a charging response message in reply to the charging request message.

3. The method (200) of claim 2, wherein the charging request message is an initial charging request message sent from the CTF (14) for an initial charging event at the CTF (14).

4. The method (200) of claim 2, wherein the charging request message is a subsequent charging request message sent from the CTF (14), and wherein determining (202) the payload size limit comprises re-determining the payload size limit with respect to a prior payload size limit indicated to the CTF (14) by the CHF (16).

5. The method (200) of claim 4, wherein the subsequent charging request message includes a trigger indication, indicating that the subsequent charging request message was triggered at the CTF (14) because of the prior payload size limit, and wherein re-determining the payload size limit is performed responsive to the trigger indication.

6. The method (200) of any of claims 1-5, further comprising calculating the payload size limit in dependence on any one or more of: a service indicated by the CTF (14) in a charging request message sent by the CTF (14) to the CHF (16), profile information associated with a subscriber indicated in the charging request message, and load conditions at the CHF (16).

7. The method (200) of any of claims 1-6, wherein determining (202) the payload size limit comprises calculating the payload size limit as a function of prevailing load conditions at the CHF (16).

8. The method (200) of claim 7, wherein the prevailing load conditions include a prevailing communication load at the CHF (16), and wherein determining (202) the payload size limit comprises setting the payload size limit to a relatively higher value, responsive to the prevailing communication load exceeding a defined communication load threshold.

9. The method (200) of claim 7, wherein the prevailing load conditions include a prevailing processing load at the CHF (16), and wherein determining (202) the payload size limit comprises setting the payload size limit to a relatively lower value, responsive to the prevailing processing load exceeding a defined processing load threshold.

10. The method (200) of any of claims 1-9, wherein determining (202) the payload size limit comprises determining at least one of: a size limit for payloads transmitted without compression, a size limit before compression for payloads transmitted with compression, and a size limit after compression for payloads transmitted with compression.

11. The method (200) of any of claims 1-10, wherein the message sent towards the CTF (14) by the CHF (16) indicates an applicability scope of the payload size limit.

12. A method (300) performed by a Charging Trigger Function, CTF, (14) of a communication network (10), the method (300) comprising:
receiving (302) a message from a Charging Function, CHF, (16) of the communication network (10), the message indicating a payload size limit to be applied by the CTF (14) with respect to the size of payload portions of charging messages sent to the CHF (16) by the CTF (14) within the same charging session; and
triggering the CTF 14 to send a charging message towards the CHF (16) in response to the payload portion of the charging message reaching the payload size limit limiting (304) payload sizes of one or more messages sent towards the CHF (16) by the CTF (14), according to the payload size limit.

13. The method (300) of claim 12,
wherein the message indicates at least one of a size limit for payloads transmitted without compression, a size limit before compression for payloads transmitted with compression, and a size limit after compression for payloads transmitted with compression, and
wherein limiting (304) the payload sizes of the one or more messages sent towards the CHF (16) by the CTF (14) comprises observing the one or more size limits indicated in the message.

14. The method (300) of any of claims 12-13, wherein the message includes an indication indicating an applicability scope of the payload size limit.

15. A network node (20) configured for operation as a Charging Function, CHF, (16) of a communication network (10), the network node (20) comprising:
communication interface circuitry (22) configured to exchange charging-related signaling with a network node (40) operating as a Charging Trigger Function, CTF, (14) in the communication network (10); and
processing circuitry (28) configured to:
determine a payload size limit to be applied by the CTF (14) with respect to the size of payload portions of charging messages sent to the CHF (16) by the CTF (14) within the same charging session, to trigger the CTF 14 to send a charging message towards the CHF (16) in response to that the payload portion of the charging message reaches the payload size limit;
generate a message for the CTF (14), indicating the payload size limit; and
send the message towards the CTF (14).

16. A network node (40) configured to operate as a Charging Trigger Function, CTF, (14) in a communication network (10), the network node (40) comprising:
communication interface circuitry (42) configured to exchange charging-related signaling with a network node (20) operating as a Charging Function, CHF, (16) in the communication network (10); and
processing circuitry (48) configured to:
receive a message from the CHF (16), the message indicating a payload size limit to be applied by the CTF (14) with respect to the size of payload portions of charging messages sent to the CHF (16) by the CTF (14) within the same charging session; and
trigger the CTF 14 to send a charging message towards the CHF (16) in response to that the payload portion of the charging message reaches the payload size limit to limit payload sizes of one or more messages sent towards the CHF (16) by the CTF (14), according to the payload size limit.

## Patentansprüche

1. Verfahren (200), das von einer Gebührenerhebungsfunktion, CHF, (16) eines Kommunikationsnetzes (10) durchgeführt wird, wobei das Verfahren (200) Folgendes umfasst:
Bestimmen (202) einer Nutzinformationsgrößengrenze, die von einer Gebührenerhebungsauslösefunktion, CTF, (14) in Bezug auf die Größe von Nutzinformationsanteilen von Gebührenerhebungsnachrichten, die von der CTF (14) innerhalb derselben Gebührenerhebungssitzung an die CHF (16) gesendet werden, angewendet werden soll, um auszulösen, dass die CTF 14 als Reaktion darauf, dass der Nutzinformationsanteil der Gebührenerhebungsnachricht die Nutzinformationsgrößengrenze erreicht, eine Gebührenerhebungsnachricht an die CHF (16) sendet;
Erzeugen (204) einer Nachricht für die CTF (14), die die Nutzinformationsgrößengrenze angibt; und
Senden (206) der Nachricht an die CTF (14).

2. Verfahren (200) nach Anspruch 1, wobei das Bestimmen (202) der Nutzinformationsgrößengrenze in Verbindung damit durchgeführt wird, dass die CHF (16) auf eine Gebührenerhebungsanforderungsnachricht von der CTF (14) reagiert, so dass das Erzeugen (204) der Nachricht für die CTF (14) das Erzeugen einer Gebührenerhebungsantwortnachricht als Antwort auf die Gebührenerhebungsanforderungsnachricht umfasst.

3. Verfahren (200) nach Anspruch 2, wobei die Gebührenerhebungsanforderungsnachricht eine erste Gebührenerhebungsanforderungsnachricht ist, die von der CTF (14) für ein erstes Gebührenerhebungsereignis bei der CTF (14) gesendet wird.

4. Verfahren (200) nach Anspruch 2, wobei die Gebührenerhebungsanforderungsnachricht eine nachfolgende Gebührenerhebungsanforderungsnachricht ist, die von der CTF (14) gesendet wird, und wobei das Bestimmen (202) der Nutzinformationsgrößengrenze das erneute Bestimmen der Nutzinformationsgrößengrenze in Bezug auf eine vorherige Nutzinformationsgrößengrenze, die der CTF (14) von der CHF (16) angegeben wurde, umfasst.

5. Verfahren (200) nach Anspruch 4, wobei die nachfolgende Gebührenerhebungsanforderungsnachricht eine Auslöseangabe einschließt, die angibt, dass die nachfolgende Gebührenerhebungsanforderungsnachricht aufgrund der vorherigen Nutzinformationsgrößengrenze bei der CTF (14) ausgelöst wurde, und wobei das erneute Bestimmen der Nutzinformationsgrößengrenze als Reaktion auf die Auslöseangabe durchgeführt wird.

6. Verfahren (200) nach einem der Ansprüche 1-5, weiter umfassend das Berechnen der Nutzinformationsgrößengrenze in Abhängigkeit von einem oder mehreren von: einem Dienst, der von der CTF (14) in einer von der CTF (14) an die CHF (16) gesendeten Gebührenerhebungsanforderungsnachricht angegeben wird, Profilinformationen, die mit einem in der Gebührenerhebungsanforderungsnachricht angegebenen Teilnehmer verknüpft sind, und Lastbedingungen bei der CHF (16).

7. Verfahren (200) nach einem der Ansprüche 1 bis 6, wobei das Bestimmen (202) der Nutzinformationsgrößengrenze das Berechnen der Nutzinformationsgrößengrenze in Abhängigkeit von vorherrschenden Lastbedingungen bei der CHF (16) umfasst.

8. Verfahren (200) nach Anspruch 7, wobei die vorherrschenden Lastbedingungen eine vorherrschende Kommunikationslast am CHF (16) einschließen und wobei das Bestimmen (202) der Nutzinformationsgrößengrenze das Festlegen der Nutzinformationsgrößengrenze auf einen relativ höheren Wert umfasst, wenn die vorherrschende Kommunikationslast einen definierten Schwellenwert der Kommunikationslast überschreitet.

9. Verfahren (200) nach Anspruch 7, wobei die vorherrschenden Lastbedingungen eine vorherrschende Verarbeitungslast bei der CHF (16) einschließen und wobei das Bestimmen (202) der Nutzinformationsgrößengrenze das Festlegen der Nutzinformationsgrößengrenze auf einen relativ niedrigeren Wert umfasst, wenn die vorherrschende Verarbeitungslast einen definierten Verarbeitungslastschwellenwert überschreitet.

10. Verfahren (200) nach einem der Ansprüche 1-9, wobei das Bestimmen (202) der Nutzinformationsgrößengrenze das Bestimmen mindestens eines umfasst von: einer Größengrenze für ohne Komprimierung übermittelte Nutzinformationen, einer Größengrenze vor der Komprimierung für mit Komprimierung übermittelte Nutzinformationen und einer Größengrenze nach der Komprimierung für mit Komprimierung übermittelte Nutzinformationen.

11. Verfahren (200) nach einem der Ansprüche 1-10, wobei die von der CHF (16) an die CTF (14) gesendete Nachricht einen Anwendbarkeitsumfang der Nutzinformationsgrößengrenze angibt.

12. Verfahren (300), das von einer Gebührenerhebungsauslösefunktion, CTF, (14) eines Kommunikationsnetzes (10) durchgeführt wird, wobei das Verfahren (300) Folgendes umfasst:
Empfangen (302) einer Nachricht von einer Gebührenerhebungsfunktion, CHF, (16) des Kommunikationsnetzes (10), wobei die Nachricht eine Nutzinformationsgrößengrenze angibt, die von der CTF (14) in Bezug auf die Größe von Nutzlastanteilen von Gebührenerhebungsnachrichten angewendet werden soll, die von der CTF (14) innerhalb derselben Gebührenerhebungssitzung an die CHF (16) gesendet werden; und
Auslösen, dass die CTF 14 als Reaktion darauf, dass der Nutzinformationsanteil der Gebührenerhebungsnachricht die Nutzinformationsgrößengrenze erreicht, eine Gebührenerhebungsnachricht an die CHF (16) sendet, die Nutzinformationsgrößen einer oder mehrerer Nachrichten, die von der CTF (14) an die CHF (16) gesendet werden, gemäß der Nutzinformationsgrößengrenze begrenzt (304).

13. Verfahren (300) nach Anspruch 12,
wobei die Nachricht mindestens eines von einer Größengrenze für ohne Komprimierung übermittelte Nutzinformationen, einer Größengrenze vor der Komprimierung für mit Komprimierung übermittelte Nutzinformationen und einer Größengrenze nach der Komprimierung für mit Komprimierung übermittelte Nutzinformationen angibt;
wobei das Begrenzen (304) der Nutzinformationsgrößen der einen oder der mehreren Nachrichten, die von der CTF (14) an die CHF (16) gesendet werden, das Beachten der in der Nachricht angegebenen Größengrenzen umfasst.

14. Verfahren (300) nach einem der Ansprüche 12-13, wobei die Nachricht eine Angabe einschließt, die einen Anwendbarkeitsumfang der Nutzinformationsgrößengrenze angibt.

15. Netzwerkknoten (20), der zum Arbeiten als eine Gebührenerhebungsfunktion, CHF, (16) eines Kommunikationsnetzes (10) konfiguriert ist, wobei der Netzwerkknoten (20) Folgendes umfasst:
Kommunikationsschnittstellenschaltungen (22), die so konfiguriert sind, dass sie Gebührenerhebungsbezogene Signalgebung mit einem Netzwerkknoten (40) austauschen, der als eine Gebührenerhebungsauslösefunktion, CTF, (14) im Kommunikationsnetz (10) arbeitet; und
Verarbeitungsschaltungen (28), die zu Folgendem konfiguriert sind:
eine Nutzinformationsgrößengrenze zu bestimmen, die von der CTF (14) in Bezug auf die Größe von Nutzinformationsanteilen von Gebührenerhebungsnachrichten, die von der CTF (14) innerhalb derselben Gebührenerhebungssitzung an die CHF (16) gesendet werden, angewendet werden soll, um auszulösen, dass die CTF 14 als Reaktion darauf, dass der Nutzinformationsanteil der Gebührenerhebungsnachricht die Nutzinformationsgrößengrenze erreicht, eine Gebührenerhebungsnachricht an die CHF (16) sendet;
eine Nachricht für die CTF (14) zu erzeugen, welche die Nutzinformationsgrößengrenze angibt; und
die Nachricht an die CTF (14) zu senden.

16. Netzwerkknoten (40), der konfiguriert ist, um als eine Gebührenerhebungsauslösefunktion, CTF, (14) in einem Kommunikationsnetzwerk (10) zu arbeiten, wobei der Netzwerkknoten (40) Folgendes umfasst:
Kommunikationsschnittstellenschaltungen (42), die so konfiguriert sind, dass sie Gebührenerhebungsbezogene Signalgebung mit einem Netzwerkknoten (20) austauscht, der als eine Gebührenerhebungsfunktion, CHF, (16) im Kommunikationsnetz (10) arbeitet; und
Verarbeitungsschaltungen (48), die zu Folgendem konfiguriert sind:
eine Nachricht von der CHF (16) zu empfangen, wobei die Nachricht eine Nutzinformationsgrößengrenze angibt, die von der CTF (14) in Bezug auf die Größe von Nutzlastanteilen von Gebührenerhebungsnachrichten angewendet werden soll, die von der CTF (14) innerhalb derselben Gebührenerhebungssitzung an die CHF (16) gesendet werden; und
auszulösen, dass die CTF 14 als Reaktion darauf, dass der Nutzinformationsanteil der Gebührenerhebungsnachricht die Nutzinformationsgrößengrenze erreicht, eine Gebührenerhebungsnachricht an die CHF (16) sendet, die Nutzinformationsgrößen einer oder mehrerer Nachrichten, die von der CTF (14) an die CHF (16) gesendet werden, gemäß der Nutzinformationsgrößengrenze begrenzt.

## Revendications

1. Procédé (200) mis en œuvre par une fonction de facturation, CHF, (16) d'un réseau de communication (10), le procédé (200) comprenant :
la détermination (202) d'une limite de taille de charge utile à appliquer par une fonction de déclenchement de facturation, CTF, (14) en ce qui concerne la taille de parties de charge utile de messages de facturation envoyés à la CHF (16) par la CTF (14) au cours de la même session de facturation, pour déclencher la CTF (14) afin d'envoyer un message de facturation à la CHF (16) en réponse à la partie de charge utile du message de facturation atteignant la limite de taille de charge utile ;
la génération (204) d'un message pour la CTF (14) indiquant la limite de taille de charge utile ; et
l'envoi (206) du message vers la CTF (14).

2. Procédé (200) selon la revendication 1, dans lequel la détermination (202) de la limite de taille de charge utile est réalisée conjointement avec la CHF (16) en réponse à un message de demande de facturation de la CTF (14), de sorte que la génération (204) du message pour la CTF (14) comprend la génération d'un message de réponse de facturation en réponse au message de demande de facturation.

3. Procédé (200) selon la revendication 2, dans lequel le message de demande de facturation est un message de demande de facturation initial envoyé par la CTF (14) pour un événement de facturation initial au niveau de la CTF (14).

4. Procédé (200) selon la revendication 2, dans lequel le message de demande de facturation est un message de demande de facturation ultérieur envoyé par la CTF (14), et dans lequel la détermination (202) de la limite de taille de charge utile comprend la redétermination de la limite de taille de charge utile en ce qui concerne une limite de taille de charge utile antérieure indiquée à la CTF (14) par la CHF (16).

5. Procédé (200) selon la revendication 4, dans lequel le message de demande de facturation ultérieur inclut une indication de déclenchement, indiquant que le message de demande de facturation ultérieur a été déclenché au niveau de la CTF (14) en raison de la limite de taille de charge utile précédente, et dans lequel la détermination de la limite de taille de charge utile est réalisée en réponse à l'indication de déclenchement.

6. Procédé (200) selon l'une quelconque des revendications 1-5, comprenant en outre le calcul de la limite de taille de charge utile en fonction d'un ou plusieurs parmi : un service indiqué par la CTF (14) dans un message de demande de facturation envoyé par la CTF (14) à la CHF (16), des informations de profil associées à un abonné indiqué dans le message de demande de facturation et des conditions de charge au niveau de la CHF (16).

7. Procédé (200) selon l'une quelconque des revendications 1-6, dans lequel la détermination (202) de la limite de taille de charge utile comprend le calcul de la limite de taille de charge utile en fonction des conditions de charge en vigueur au niveau de la CHF (16).

8. Procédé (200) selon la revendication 7, dans lequel les conditions de charge en vigueur incluent une charge de communication en vigueur au niveau de la CHF (16), et dans lequel la détermination (202) de la limite de taille de charge utile comprend la fixation de la limite de taille de charge utile à une valeur relativement plus élevée, en réponse à la charge de communication en vigueur dépassant un seuil de charge de communication défini.

9. Procédé (200) selon la revendication 7, dans lequel les conditions de charge en vigueur incluent une charge de traitement en vigueur au niveau de la CHF (16), et dans lequel la détermination (202) de la limite de taille de charge utile comprend la fixation de la limite de taille de charge utile à une valeur relativement inférieure, en réponse à la charge de traitement en vigueur dépassant un seuil de charge de traitement défini.

10. Procédé (200) selon l'une quelconque des revendications 1-9, dans lequel la détermination (202) de la limite de taille de charge utile comprend la détermination d'au moins l'une parmi : une limite de taille pour des charges utiles transmises sans compression, une limite de taille avant compression pour des charges utiles transmises avec compression et une limite de taille après compression pour des charges utiles transmises avec compression.

11. Procédé (200) selon l'une quelconque des revendications 1-10, dans lequel le message envoyé à la CTF (14) par la CHF (16) indique un champ d'application de la limite de taille de charge utile.

12. Procédé (300) mis en œuvre par une fonction de déclenchement de facturation, CTF, (14) d'un réseau de communication (10), le procédé (300) comprenant :
la réception (302) d'un message provenant d'une fonction de facturation, CHF, (16) du réseau de communication (10), le message indiquant une limite de taille de charge utile à appliquer par la CTF (14) en ce qui concerne la taille de parties de charge utile de messages de facturation envoyés à la CHF (16) par la CTF (14) au cours de la même session de facturation ; et
le déclenchement de la CTF 14 pour envoyer un message de facturation à la CHF (16) en réponse à la partie de charge utile du message de facturation atteignant la limite de taille de charge utile (304) limitant des tailles de charge utile d'un ou plusieurs messages envoyés à la CHF (16) par la CTF (14), selon la limite de taille de charge utile.

13. Procédé (300) selon la revendication 12,
dans lequel le message indique au moins une parmi une limite de taille pour des charges utiles transmises sans compression, une limite de taille avant compression pour des charges utiles transmises avec compression, et une limite de taille après compression pour des charges utiles transmises avec compression, et
dans lequel la limitation (304) des tailles de charge utile des un ou plusieurs messages envoyés à la CHF (16) par la CTF (14) comprend le respect des une ou plusieurs limites de taille indiquées dans le message.

14. Procédé (300) selon l'une quelconque des revendications 12-13, dans lequel le message inclut une indication indiquant un champ d'application de la limite de taille de charge utile.

15. Nœud de réseau (20) configuré pour fonctionner en tant que fonction de facturation, CHF, (16) d'un réseau de communication (10), le nœud de réseau (20) comprenant :
une circuiterie d'interface de communication (22) configurée pour échanger une signalisation liée à la facturation avec un nœud de réseau (40) fonctionnant en tant que fonction de déclenchement de facturation, CTF, (14) dans le réseau de communication (10) ; et
une circuiterie de traitement (28) configurée pour :
déterminer une limite de taille de charge utile à appliquer par la CTF (14) en ce qui concerne la taille de parties de charge utile de messages de facturation envoyés à la CHF (16) par la CTF (14) au cours de la même session de facturation, afin de déclencher l'envoi par la CTF 14 d'un message de facturation à la CHF (16) en réponse au fait que la partie de charge utile du message de facturation atteint la limite de taille de charge utile ;
générer un message pour la CTF (14), indiquant la limite de taille de charge utile ; et
envoyer le message vers la CTF (14).

16. Nœud de réseau (40) configuré pour fonctionner en tant que fonction de déclenchement de facturation, CTF, (14) dans un réseau de communication (10), le nœud de réseau (40) comprenant :
une circuiterie d'interface de communication (42) configurée pour échanger une signalisation liée à la facturation avec un nœud de réseau (20) fonctionnant en tant que fonction de facturation, CHF, (16) dans le réseau de communication (10) ; et
une circuiterie de traitement (48) configurée pour :
recevoir un message de la CHF (16), le message indiquant une limite de taille de charge utile à appliquer par la CTF (14) en ce qui concerne la taille de parties de charge utile de messages de facturation envoyés à la CHF (16) par la CTF (14) au cours de la même session de facturation ; et
déclencher la CTF 14 pour envoyer un message de facturation à la CHF (16) en réponse au fait que la partie de charge utile du message de facturation atteint la limite de taille de charge utile pour limiter les tailles de charge utile d'un ou plusieurs messages envoyés à la CHF (16) par la CTF (14), conformément à la limite de taille de charge utile.
